# EUROPEAN PATENT APPLICATION

(11) **EP 3 477 544 A1**
(43) Date of publication of application: **01.05.2019**
(21) Application number: 18202677.3
(22) Date of filing: 25.10.2018
(51) Int. Cl.: G06K 9/00

(54) **INFORMATION PROCESSING APPARATUS, INFORMATION PROCESSING METHOD, IMAGING APPARATUS, NETWORK CAMERA SYSTEM, AND PROGRAM**

(30) Priority: 30.10.2017 JP 2017209131
(71) Applicant: CANON KABUSHIKI KAISHA, Ohta-ku Tokyo 146-8501 (JP)
(72) Inventor: KITAGAWA, Eiichiro, Ohta-ku, Tokyo 146-8501 (JP)
(74) Representative: Saunders, Mark

(57) **Abstract**

A subject detection region is appropriately set relative to a reference position used for a detection of a passed subject. An information processing apparatus includes obtaining means (105) configured to obtain setting information of a detection line which is set in an image and which is to be used for a detection of passing of an object which has been detected in the image, and setting means (110) configured to set a detection region, in the image, to be subjected to a detection process of detecting the object in the image based on the setting information of the detection line obtained by the obtaining means. The obtaining means obtains at least one of a position, a length, and an inclination of a detection line included in the image as the setting information of the detection line.

## Description

### BACKGROUND OF THE INVENTION

### Field of the Invention

The present disclosure relates to an information processing apparatus, an information processing method, an imaging apparatus, a network camera system, and a program.

### Description of the Related Art

In general, a human-body detection process of detecting a human body in an image captured by a surveillance camera by analyzing the image has been used. The human-body detection process is used in a passing detection process of counting a number of human bodies which have passed a detection line set in the image.

The human-body detection process employs a method for extracting a feature value of a human body in an image and performing template matching by comparing the feature value with a dictionary (templates) generated in advance. However, in the template matching, the comparison between a feature value extracted from the image to be processed and a dictionary is repeatedly performed, and therefore, a long period of time is required for processing. Therefore, if a large number of people are included in the image or if people and a complicated background are difficult to be distinguished from each other, the human-body detection process is not completed within a predetermined period of time. In this case, the process is interrupted and a next image is subjected to the human-body detection process, and therefore, accuracy of the passing detection process is degraded.

To address this problem, a method for improving a frame rate of a detection process by executing the human-body detection process only on a predetermined region in an image is used.

Japanese Patent Laid-Open No. 2007-280088 discloses a method for generating a range image including distance information held by individual pixels using a stereo camera and setting a size of a detection region in accordance with a size of a specific object to be detected using the distance information.

However, in a case where human bodies are detected in a predetermined region in an image and a number of human bodies which have passed a detection line in the detected human bodies are counted, a user is required to manually set a detection region to be subjected to the human-body detection process and a detection line to be used in the passing detection process and the settings are troublesome. Furthermore, it is difficult for the user to appropriately set the detection region relative to the detection line. Even by the technique disclosed in Japanese Patent Laid-Open No. 2007-280088, an appropriate detection region may not be automatically set relative to the detection line.

### SUMMARY OF THE INVENTION

The present invention in its first aspect provides an information processing apparatus as specified in claims 1 to 10.

The present invention in its second aspect provides an information processing method as specified in claim 11.

The present invention in its third aspect provides an imaging apparatus as specified in claim 12.

The present invention in its fourth aspect provides a network camera system as specified in claim 13.

The present invention in its fifth aspect provides a program as specified in claim 14.

Further features of the present invention will become apparent from the following description of exemplary embodiments with reference to the attached drawings.

### BRIEF DESCRIPTION OF THE DRAWINGS

Fig. 1 is a diagram illustrating an example of configurations of a network camera and a client apparatus.
Fig. 2 is a diagram illustrating an example of a hardware configuration of the network camera.
Fig. 3 is a diagram illustrating an example of a detection line setting screen.
Fig. 4 is a flowchart of a procedure of a process of setting a detection region of the network camera.
Fig. 5 is a diagram illustrating a method for setting a detection region.
Fig. 6 is a flowchart of a procedure of a process of generating a detection region.
Fig. 7 is a diagram illustrating a problem which occurs when a detection region is set in an entire image.
Fig. 8 is a diagram illustrating a method for setting a detection region.
Figs. 9A and 9B are diagrams illustrating a method for setting a detection region.
Fig. 10 is a diagram illustrating a method for setting a detection region according to another embodiment.
Fig. 11 is a diagram illustrating another example of configurations of a network camera and a client apparatus.

### DESCRIPTION OF THE EMBODIMENTS

Hereinafter, embodiments of the present disclosure will be described in detail with reference to the accompanying drawings.

### First Embodiment

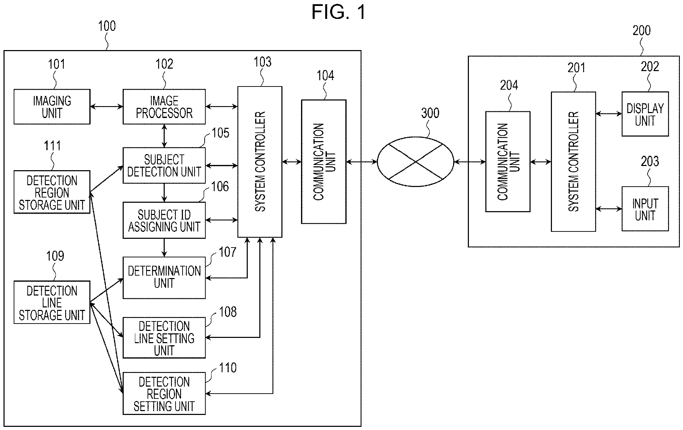

Fig. 1 is a block diagram illustrating an example of configurations of a network camera 100 and a client apparatus 200. A network camera system includes the network camera (hereinafter simply referred to as a "camera") 100 and the client apparatus 200 which are connected to each other in a communication available manner through a network 300.

The network camera system is used to perform analysis of customer behavior in a retailing field, for example. Specifically, the network camera system may obtain data on a level of congestion of customers in front of a cash register in a shop for each day of the week and each time zone by counting a number of people in a region in front of the cash register. Furthermore, the network camera system may obtain the number of customers who have visited a shop by counting a number of people who have passed a predetermined position in the shop and obtain paths of movement of the customers in the shop.

The network 300 includes a plurality of routers, a plurality of switches, a plurality of cables, and the like which are based on a communication standard of Ethernet (registered trademark). Note that the network 300 may be based on any communication standard and have any scale and any configuration as long as the camera 100 and the client apparatus 200 may communicate with each other. The network 300 may be realized by the Internet, a wired local area network (LAN), a wireless LAN, a wide area network (WAN), or a combination of them.

The camera 100 is an imaging apparatus which captures an image in a predetermined imaging range. The camera 100 may be a pan-tilt-zoom camera (PTZ camera) which is configured such that an imaging region is changeable. Furthermore, the camera 100 may correspond to the power over Ethernet (PoE) or may be configured such that electric power is supplied through a LAN cable. Furthermore, although the single camera 100 is connected to the network 300 in Fig. 1, a plurality of cameras may be connected to the network 300.

The client apparatus 200 is configured by a terminal apparatus, such as a personal computer (PC), a smartphone, or a tablet PC, and is capable of transmitting various commands to the camera 100. Examples of the commands transmitted to the camera 100 include a command for changing an angle of view and an imaging direction (a direction) of the camera 100, a command for changing an imaging parameter, a command associated with image processing, and a command for starting transmission of an image. The client apparatus 200 may receive a response to such a command from the camera 100.

The camera 100 changes an imaging direction and an angle of view when receiving the command for changing an imaging direction and an angle of view from the client apparatus 200. Furthermore, the camera 100 transmits an image to the client apparatus 200 in accordance with a command for starting transmission of an image. The client apparatus 200 receives an image transmitted from the camera 100 in response to the command for starting transmission of an image described above, records the received image, and performs display control of displaying the image for a user of the client apparatus 200.

As illustrated in Fig. 1, the camera 100 includes an imaging unit 101, an image processor 102, a system controller 103, and a communication unit 104. The camera 100 further includes a subject detection unit 105, a subject ID assigning unit 106, a determination unit 107, a detection line setting unit 108, a detection line storage unit 109, a detection region setting unit 110, and a detection region storage unit 111. Furthermore, the client apparatus 200 includes a system controller 201, a display unit 202, an input unit 203, and a communication unit 204. The communication unit 104 of the camera 100 and the communication unit 204 of the client apparatus 200 are connected to each other in a communication available manner through the network 300.

First, a configuration of the camera 100 and functions of the units will be described.

The imaging unit 101 includes a lens and an imaging element, such as a complementary metal oxide semiconductor (CMOS) or a charge coupled device (CCD), and captures an image of a subject. Furthermore, the imaging unit 101 performs a process of converting an optical image formed on an imaging surface into a digital electric signal by photoelectric conversion. The image processor 102 performs predetermined image processing on the signal obtained through the photoelectric conversion performed by the imaging unit 101. Examples of the image processing include a white balance process, a sharpness process, and a gradation conversion process. Furthermore, the image processor 102 generates image data by performing compression encoding on the image which has been subjected to the image processing and outputs the generated image data to the system controller 103.

The system controller 103 outputs the image supplied from the image processor 102 to the communication unit 104 so as to transmit the image to the client apparatus 200. Furthermore, the system controller 103 analyzes a command supplied from the client apparatus 200 through the communication unit 104 and performs processing in accordance with the command. Specifically, the system controller 103 issues an instruction for changing an image processing parameter to the image processor 102 in accordance with the received command. Furthermore, the system controller 103 performs a setting of parameters of the subject detection process on the subject detection unit 105 and a setting of parameters of the passing detection process on the determination unit 107 in accordance with the received command.

The subject detection unit 105 performs the subject detection process of detecting an object (a human body, for example) in the image generated by the image processor 102 by analyzing the image. Specifically, the subject detection unit 105 reads setting information of the detection region stored in the detection region storage unit 111 and performs the subject detection process on the detection region in the image generated by the image processor 102.

The subject ID assigning unit 106 assigns an ID for identifying a subject detected in images consecutively obtained to a result of the detection of the subject detection process performed by the subject detection unit 105. Specifically, the subject ID assigning unit 106 performs a matching process between subjects detected in the images consecutively obtained based on positional information and size information of the subject detected by the subject detection unit 105. Thereafter, the subject ID assigning unit 106 assigns a common ID to subjects which match each other and generates and assigns a new ID to a subject which does not match any subject as a subject which is newly detected. A plurality of subjects detected in the image may be distinguished from one another by assigned subject IDs.

The determination unit 107 performs the passing detection process of determining whether the subject detected by the subject detection unit 105 has passed the detection line set in the image. Note that the determination may not be performed using a line in the passing detection process as long as a process of determining whether a subject has passed a predetermined position (a reference position) in an image is performed. First, the determination unit 107 stores a current position of the subject to which an ID has been assigned by the subject ID assigning unit 106 in a memory or the like, not illustrated. Then the determination unit 107 reads the setting information of the detection line stored in the detection line storage unit 109 and determines whether the subject has passed the detection line based on a past position and the current position of the subject. When the determination is affirmative, the determination unit 107 increments a passing count so as to count the number of subjects which have passed the detection line.

The detection line setting unit 108 sets the detection line to be used for detecting passing of the subject and stores setting information of the detection line in the detection line storage unit 109. Here, the setting information of the detection line includes at least one of a position, a length, and an inclination of the detection line in the image.

The detection region setting unit 110 sets a detection region in the image which is to be subjected to the subject detection process based on the setting information of the detection line newly stored in the detection line storage unit 109 and stores the setting information of the detection region in the detection region storage unit 111. In other words, the detection region setting unit 110 sets, in accordance with the detection line, a detection region in the image so as to include the detection line.

Second, a configuration of the client apparatus 200 and functions of the units will be described.

The system controller 201 of the client apparatus 200 incorporates an image processor which combines images supplied from the camera 100 through the communication unit 204 and performs display control of displaying the images supplied from the camera 100 in the display unit 202. Furthermore, the system controller 201 generates various commands in accordance with graphic user interface (GUI) operations performed by the user and outputs the generated commands to the communication unit 204 so as to transmit the commands to the camera 100.

The display unit 202 includes a monitor, such as a liquid crystal display (LCD), and displays an image obtained from the camera 100 and GUIs. The input unit 203 includes a pointing device, such as a keyboard or a mouse, and the user of the client apparatus 200 operates the input unit 203 to input various commands through the GUIs. In this embodiment, the user of the client apparatus 200 operates the input unit 203 to specify a detection line described above through one of the GUIs.

The communication unit 204 receives images and signals supplied from the communication unit 104 of the camera 100 through the network 300 and transmits the received information to the system controller 201. Furthermore, the communication unit 204 transmits the commands described above to the communication unit 104 of the camera 100 through the network 300 based on an instruction issued by the system controller 201.

### Hardware Configuration

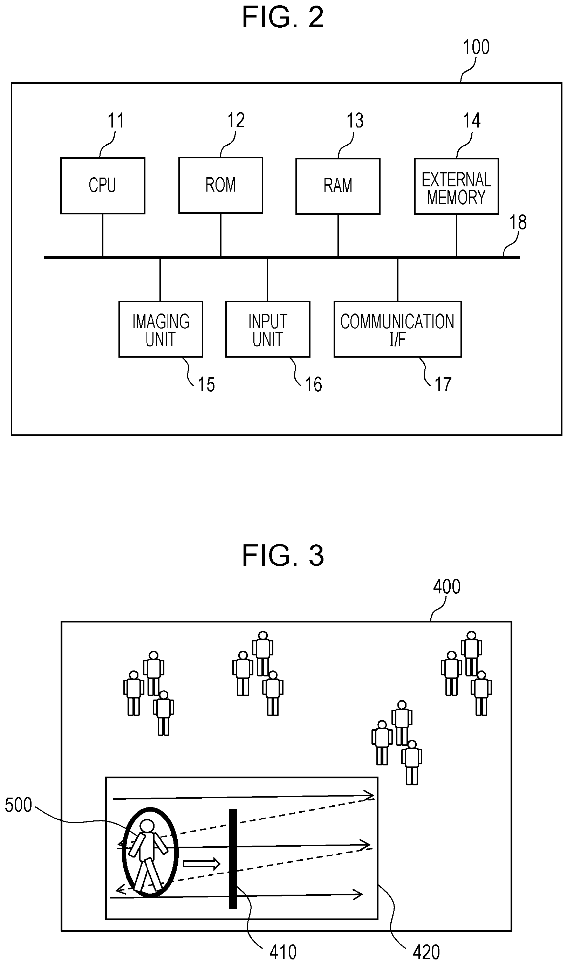

Fig. 2 is a diagram illustrating an example of a hardware configuration of the camera 100.

As illustrated in Fig. 2, the camera 100 includes a central processing unit (CPU) 11, a read only memory (ROM) 12, a random access memory (RAM) 13, an external memory 14, an imaging unit 15, an input unit 16, a communication interface (I/F) 17, and a system bus 18. The CPU 11 integrally controls operations of the camera 100 and controls the components (12 to 17) through the system bus 18. The ROM 12 is a nonvolatile memory which stores control programs and the like required by the CPU 11 for executing processes. Note that the programs may be stored in the external memory 14 or a detachable storage medium (not illustrated). The RAM 13 functions as a main memory, a work area, and the like of the CPU 11. Specifically, the CPU 11 loads required programs and the like into the RAM 13 from the ROM 12 when processes are executed and executes the programs and the like so as to realize various functional operations.

The external memory 14 stores various data, various information, and the like required for executing processes performed by the CPU 11 using the programs. The external memory 14 stores various data, various information, and the like obtained when the CPU 11 executes processes using the programs and the like. The imaging unit 15 corresponds to the imaging unit 101 of Fig. 1. The input unit 16 includes a power supply button, various setting buttons, and the like. The communication I/F 17 corresponds to the communication unit 104 of Fig. 1. Some or all of the functions of the elements of the camera 100 of Fig. 1 may be realized when the CPU 11 executes the programs. Note that at least some of the elements included in the camera 100 of Fig. 1 may operate as dedicated hardware. In this case, the dedicated hardware operates under control of the CPU 11.

Note that, in a case of the client apparatus 200, a hardware configuration corresponding to the display unit 202 of Fig. 1 is included instead of the imaging unit 15 of Fig. 2. Furthermore, in the case of the client apparatus 200, a hardware configuration corresponding to the input unit 203 of Fig. 1 serving as the input unit 16 and a hardware configuration corresponding to the communication unit 204 serving as the communication I/F 17 are included. Then some or all of the functions of the elements included in the client apparatus 200 of Fig. 1 may be realized when a CPU of the client apparatus 200 corresponding to the CPU 11 executes programs. Note that at least some of the elements included in the client apparatus 200 of Fig. 1 may operate as dedicated hardware. In this case, the dedicated hardware operates under control of the CPU 11.

The camera 100 transmits an image to the client apparatus 200 so as to perform display control for displaying the image in the display unit 202 of the client apparatus 200 and accepts a designation of the detection line in the image displayed in the display unit 202. The camera 100 obtains setting information of the specified detection line when the user specifies the detection line in the image displayed in the display unit 202 of the client apparatus 200, and sets a detection region to be subjected to the subject detection process based on the setting information of the obtained detection line.

Fig. 3 is a diagram illustrating an example of a detection line setting screen 400 displayed in the display unit 202 of the client apparatus 200. The setting screen 400 displays an image captured by the camera 100. Note that a video image currently captured by the camera 100 or a video image recorded in advance may be displayed in the setting screen 400. Alternatively, a still image may be displayed in the setting screen 400.

The user may specify an arbitrary detection line 410 in the setting screen 400. By the passing detection process using the detection line 410, a subject 500 which has moved rightward in the image and which has passed the detection line 410 may be detected, for example. According to this embodiment, the camera 100 sets a detection region 420 which is suitable for the passing detection process using the detection line 410 based on the setting information of the detection line 410 so that a region to be subjected to the subject detection process is restricted to the detection region 420.

In the subject detection process, the camera 100 extracts a feature value of an object (a human body, for example) from the detection region 420 in the image and performs template matching by comparing the feature value with a dictionary generated in advance. Here, the camera 100 performs horizontal scanning from an upper left portion in the detection region 420 and further performs horizontal scanning from left to right on a next line so as to detect an object (a human body, for example) in the detection region 420. Specifically, the subject detection process is not performed in a region out of the detection region 420.

Note that a case where the camera 100 serving as an imaging apparatus operates as an information processing apparatus which sets a detection region is described in this embodiment. Note that the client apparatus 200 may operate as the information processing apparatus or a general PC or another device may operate as the information processing apparatus. This is true for a second embodiment described below.

Next, an operation of the camera 100 according to this embodiment will be described.

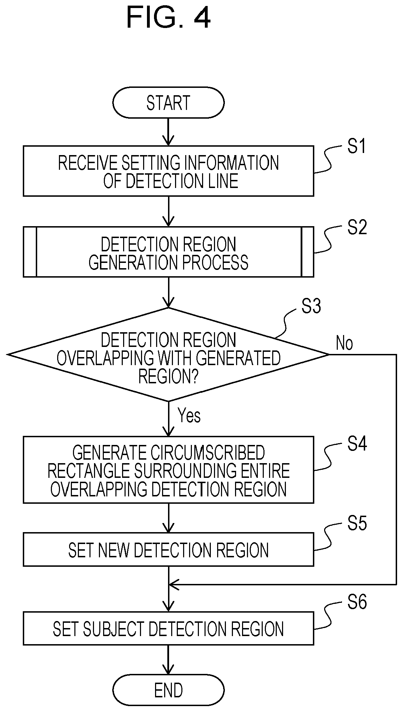

Fig. 4 is a flowchart of a procedure of a detection region setting process executed by the camera 100. The process in Fig. 4 is started at a timing when the user specifies a detection line in a setting screen displayed in the display unit 202 of the client apparatus 200. Note that the timing when the process is started in Fig. 4 is not limited to the timing described above.

The camera 100 may realize various processes illustrated in Fig. 4 when the CPU 11 reads and executes required programs. Note that the process of Fig. 4 may be realized when at least some of the elements included in the camera 100 of Fig. 1 operate as dedicated hardware. In this case, the dedicated hardware operates under control of the CPU 11. Hereinafter, an alphabet S indicates steps in flowcharts.

First, in S1, the camera 100 receives setting information of a detection line specified by the user operating the setting screen displayed in the display unit 202 of the client apparatus 200. Here, the setting information of the detection line includes information on a position, a length, and an inclination of the detection line as described above. In S2, the camera 100 executes a detection region generation process of generating a detection region to be subjected to the subject detection process based on the setting information of the detection line obtained in S1.

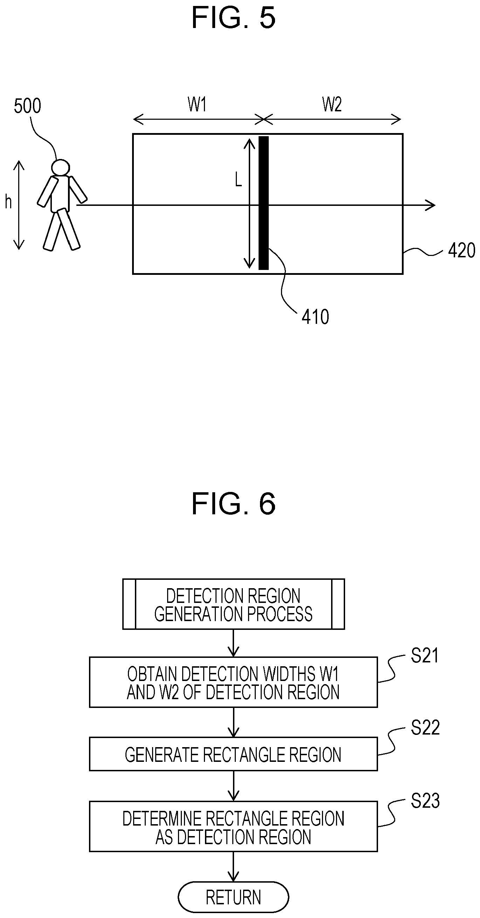

Fig. 5 is a diagram illustrating a method for generating the detection region 420 relative to the detection line 410.

It is assumed that a position of the detection line 410 specified by the user is associated with a region including a person to be detected and a length L of the detection line 410 is associated with a body height h of the person to be detected. The camera 100 sets a rectangle region having the length L of the detection line 410 in an extending direction of the detection line 410 as the detection region 420. It is assumed further that an inclination of the detection line 410 is associated with a movement direction of the person to be detected, and the camera 100 sets a rectangle region having predetermined detection widths W1 and W2 in a direction orthogonal to the detection line 410 as the detection region 420.

It is assumed in this embodiment that a body height h of a general subject is 1.7 m and the length L of the detection line 410 corresponds to 2 m in the image. To appropriately detect passing, distances corresponding to three steps forward and backward of the subject relative to the detection line 410 are denoted by the detection widths W1 and W2. Assuming that a length of a stride of the subject is 0.9 m, distances of 2.7 m relative to the detection line 410 in the image correspond to the detection widths W1 and W2 in forward and backward portions relative to the detection line 410. Assuming that the length L of the detection line 410 is 2 m, the detection widths W1 and W2 in the forward and backward portions relative to the detection line 410 are 1.35 times larger than the length L of the detection line 410. In this way, the camera 100 sets lengths obtained by multiplying the length L of the detection line 410 by a predetermined magnification (1.35) as the detection widths W1 and W2.

Note that a length of the detection region 420 in the extending direction of the detection line 410 may be obtained by adding a predetermined margin to the length L of the detection line 410. Specifically, the camera 100 determines a rectangle region which includes the detection line 410, which has at least the length L of the detection line 410 in the extending direction of the detection line 410, and which has the predetermined detection widths W1 and W2 in the direction orthogonal to the detection line 410 as the detection region 420 relative to the detection line 410.

Furthermore, the detection widths W1 and W2 may not be the same widths, and the detection width W1 may be larger than the detection width W2 so that a subject to be detected in passing thereof may be reliably detected.

Fig. 6 is a flowchart of a procedure of the detection region generation process executed in S2 of Fig. 4.

In S21, the camera 100 calculates the detection widths W1 and W2 of the detection region by multiplying the length L of the detection line by a predetermined magnification (1.35 in this embodiment) based on the length L of the detection line included in the setting information of the detection line. In S22, the camera 100 generates a rectangle region which includes the length L of the detection line in the extending direction of the detection line and which is wider by the detection widths W1 and W2 from the two sides of the detection line in the direction orthogonal to the detection line. Finally, in S23, the detection region setting unit 110 of the camera 100 sets the rectangle region generated in S22 as a detection region relative to the detection line.

Referring back to Fig. 4, in S3, it is determined whether a detection region which overlaps with the detection region generated in S2 is stored in the detection region storage unit 111. When the determination is affirmative, the process proceeds to S4, and otherwise, the process proceeds to S6.

In S4, the camera 100 generates a circumscribed rectangle surrounding the entire overlapping detection region and the process proceeds to S5. In S5, the camera 100 deletes all setting information of the overlapping detection region from the detection region storage unit 111. Furthermore, the camera 100 sets the circumscribed rectangle generated in S4 as a common setting region of the detection settings.

In S6, the camera 100 stores the setting information of the detection region set in S2 or S5 in the detection region storage unit 111 and the process is terminated.

As described above, the camera 100 of this embodiment obtains the setting information of the detection line which is set in the image and which is to be used in the subject detection process and sets a detection region in the image to be subjected to the subject detection process based on the obtained setting information of the detection line.

By this, the camera 100 may automatically set a detection region of a subject suitable for passing detection using a detection line based on setting information of the detection line. In this way, the camera 100 may appropriately set a detection region of the subject suitable for the passing detection setting without performing a user operation, and accordingly, the passing detection process may be performed with high accuracy without bothering the user.

Before the setting information of the detection line is obtained, the detection line setting unit 108 of the camera 100 causes the system controller 201 of the client apparatus 200 to display an image so as to accept a designation of the detection line in the image displayed in the display unit 202. The user may specify a plurality of points in the image using a pointing device, such as a keyboard or a mouse, included in the client apparatus 200 with reference to the image displayed in the display unit 202 of the client apparatus 200 so as to specify a detection line. The camera 100 may obtain positional information of the plurality of points specified by the user in the image and information on lengths and inclinations of line segments formed by the plurality of points specified by the user as the setting information of the detection line.

Accordingly, the detection line setting unit 108 of the camera 100 may appropriately obtain the setting information of the detection line specified by the user and the detection region setting unit 110 of the camera 100 may set an appropriate detection region relative to the detection line specified by the user.

Furthermore, the detection region setting unit 110 of the camera 100 determines a region which includes the detection line, which has at least the length L of the detection line in the extending direction of the detection line, and which has the predetermined detection widths W1 and W2 in a direction orthogonal to the detection line as a detection region to be subjected to the subject detection process based on the setting information of the detection line. Here, the detection widths W1 and W2 are obtained by multiplying the length L of the detection line by a predetermined magnification.

In this way, the camera 100 focuses the association between the detection line specified by the user and the information on the subject which is to be subjected to the passing detection so as to set a position and a size of the detection region. Accordingly, the camera 100 may set a detection region in which a subject which has been passed is appropriately detected and accuracy of the passing detection process may be appropriately improved.

The camera 100 executes the subject detection process at a certain frame rate determined in advance on images which are consecutive in time-series. To accurately count objects (human bodies, for example) which have passed the detection line by the passing detection process, the subject detection process is required to be performed at a frame rate of a certain level or more. For example, the subject detection process is required to be performed on 10 images per one second. However, since objects (human bodies) are detected by the template matching in the subject detection process, a long period of time is required for the process. Therefore, in a case where a large number of people are included in the image or in a case where a complicated background is difficult to be distinguished from people, the process may not be completed in real time. In this case, the subject detection process is interrupted and a next image is subjected to the subject detection process, and therefore, accuracy of the passing detection process is degraded.

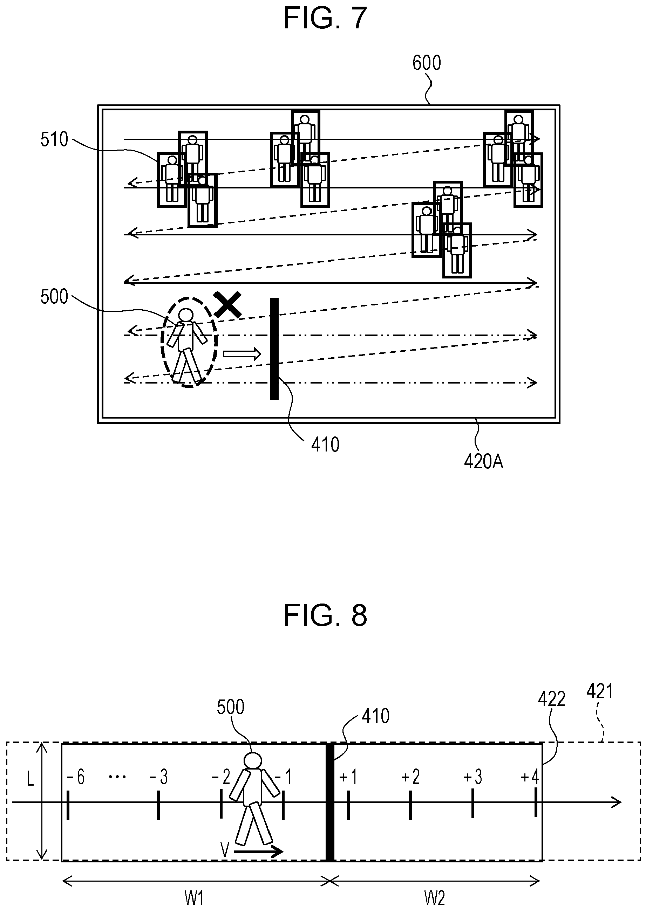

Specifically, as illustrated in Fig. 7, in a case where an entire image 600 is set as a detection region 420A in the subject detection process, the scanning is sequentially performed from an upper left position of the image 600 to a last position in a lower right position so that a process of detecting a human body in the image 600 is performed. Therefore, in the case where a large number of people are included in an image as described above, for example, an operation of interrupting the process is required to be performed although human bodies included in a lower portion in the image 600 are not detected.

In a case where the subject 500 to be subjected to the passing detection is included in the lower portion in the image 600, the detection process is performed only on subjects 510 included in an upper portion in the image 600 which does not relate to a result of the passing detection process but the detection process is not performed on the subject 500. As a result, the subject 500 may not be appropriately detected and accuracy of the passing count is degraded.

On the other hand, in this embodiment, an appropriate detection region may be set in accordance with a set detection line so that the detection process is not performed on a region which does not relate to the passing detection. Accordingly, a subject to be subjected to the passing detection may be appropriately detected by the subject detection process, and the passing detection process may be performed with high accuracy.

### Second Embodiment

A second embodiment of the present disclosure will now be described.

The case where a detection region is set based on setting information of a detection line is described in the foregoing first embodiment. In the second embodiment, a case where a detection region is set taking a moving speed of a subject in an orthogonal direction relative to a detection line into consideration will be described.

To appropriately detect passing of a subject, the subject is required to be detected a certain number of times before and after the subject has passed a detection line. Therefore, in this embodiment, a camera 100 sets detection widths W1 and W2 of a detection region such that the numbers of times the subject is detected before and after the subject has passed the detection line are equal to or larger than the set number of times.

Specifically, as illustrated in Fig. 8, a detection region 422 is generated such that the number of times a subject 500 is detected before the subject 500 has passed the detection line 410 is at least 6 and the number of times the subject 500 is detected after the subject 500 has passed the detection line 410 is at least 4. In this case, assuming that a detection frame rate of a subject is 10 fps, the detection widths W1 and W2 of the detection region are required to be set such that the subject is detected for 0.6 seconds before the passing and 0.4 seconds after the passing in the subject detection process. The detection widths W1 and W2 of the detection region vary in accordance with a moving speed V of the subject. Therefore, the moving subject is actually measured and the detection widths W1 and W2 of the detection region are set based on the moving speed V of the subject.

First, as denoted by a dotted line in Fig. 8, the camera 100 sets a rectangle region which extends to image ends in a direction orthogonal to the detection line 410 and which has a width corresponding to a length L of the detection line 410 as a base region 421. Subsequently, the subject 500 moves at the maximum moving speed V to be detected and the camera 100 actually performs a subject detection process and a passing detection process using the base region 421 and the detection line 410. Then the detection region setting unit 110 of the camera 100 obtains a position of the subject 500 for each processing frame and determines the detection region 422 having a position where the subject 500 is detected six times before the subject 500 has passed the detection line 410 and a position where the subject 500 is detected four times after the subject 500 has passed the detection line 410 as ends thereof.

As described above, the detection region setting unit 110 of the camera 100 according to this embodiment sets a detection region to be subjected to the subject detection process based on setting information of a detection line and a moving speed of a subject. Accordingly, as the moving speed of the subject to be subjected to the passing detection is higher, a larger detection region may be set. Specifically, the camera 100 sets the detection widths W1 and W2 of the detection region such that the numbers of times the subject is detected before and after the subject has passed the detection line are equal to or larger than the set numbers of times based on the moving speed of the subject. Accordingly, the subject may be appropriately detected and passing through the detection line may be detected with high accuracy. Furthermore, the camera 100 may set the number of times before the passing which is larger than the number of times after the passing. In this case, the passing of the subject may be more reliably detected.

### Third Embodiment

A third embodiment of the present disclosure will be described.

The case where a detection region is set based on setting information of a detection line is described in the foregoing first embodiment. In the third embodiment, a case where a detection region is set taking a size of a subject into consideration will be described.

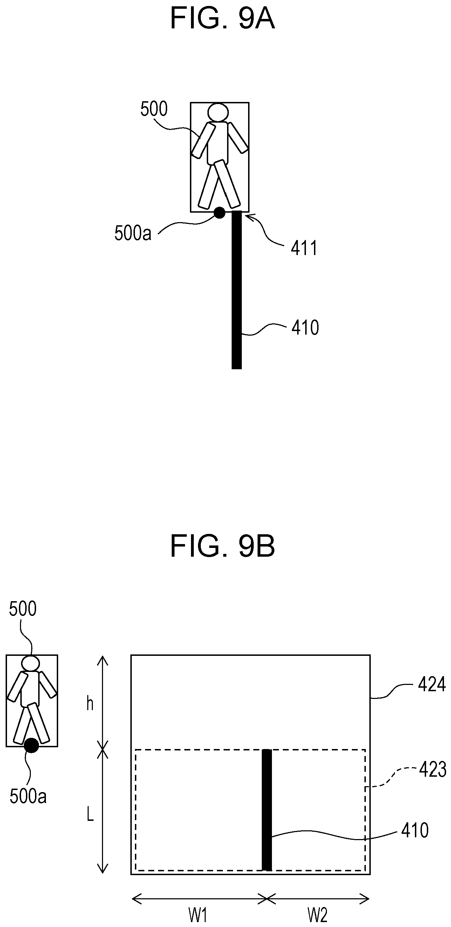

As illustrated in Fig. 9A, in a case where a position of a subject 500 which is to be subjected to passing detection is indicated by a foot position 500a of the subject 500, when the subject 500 has barely passed an upper end 411 of a detection line 410, a most portion of the subject 500 has passed an outside of the detection line 410.

Therefore, as described above with reference to Fig. 5, in the case where a detection region 420 having a length L of the detection line 410 in an extending direction of the detection line 410 is set and a subject detection process is performed relative to the detection region 420, for example, the subject 500 illustrated in Fig. 9A may not be appropriately detected.

Therefore, in this embodiment, the detection region setting unit 110 of the camera 100 sets a length of a detection region in the extending direction of the detection line 410 based on a size of the subject 500. Specifically, the detection region setting unit 110 of the camera 100 sets a detection region 424 including a length corresponding to a size (a body height h) of the subject 500 on a side of the upper end 411 of the detection line 410 as illustrated in Fig. 9B. The detection region 424 includes the detection line 410, includes the length L of the detection line 410 in the extending direction of the detection line 410, and is obtained by extending a region 423 having the detection widths W1 and W2 in a direction orthogonal to the detection line 410 by the size (the body height h) of the subject 500 in a direction of the upper end 411 of the detection line 410.

As described above, the camera 100 according to this embodiment sets a detection region to be subjected to the subject detection process based on setting information of a detection line and a size of a subject. In this way, a detection region of a size which is sufficient for detection of the subject to be subjected to the passing detection may be set. Specifically, the detection region setting unit 110 of the camera 100 sets a length of the detection region in the extending direction of the detection line based on the size of the subject. Accordingly, the subject may be appropriately detected and passing through the detection line may be detected with high accuracy.

Furthermore, the detection region setting unit 110 of the camera 100 may set a detection region having at least a length corresponding to a size of a subject on an upper end side of a detection line. In this case, even a subject which barely passes a detection line by a foot may be more appropriately detected by the subject detection process and the passing through the detection line may be detected.

### Modifications

In the foregoing embodiments, the case where a detection line extends in a vertical direction in an image is described. However, the detection line may horizontally or obliquely extend in the image.

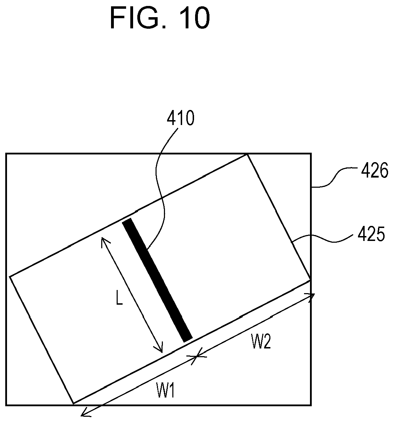

When a detection line 410 obliquely extends as illustrated in Fig. 10, as with the foregoing embodiments, a camera 100 sets a rectangle region 425 which has a length L of the detection line 410 in an extending direction of the detection line 410 and which has detection widths W1 and W2 in a direction orthogonal to the detection line 410. Then the camera 100 sets a circumscribed rectangle which surrounds the rectangle region 425 as a detection region 426. In this way, an appropriate detection region may be set relative to a detection line which obliquely extends in an image.

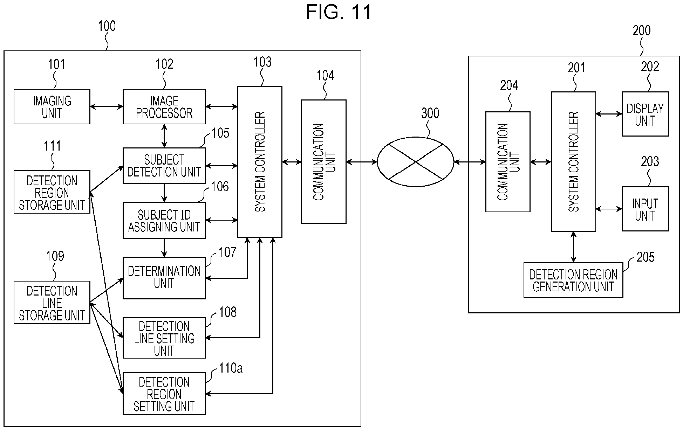

Furthermore, although the case where the camera 100 executes the process of generating a detection region is described in the foregoing embodiments, the client apparatus 200 may execute the process of generating a detection region. In this case, as illustrated in Fig. 11, the client apparatus 200 includes a detection region generation unit 205 which performs the process of generating a detection region similarly to the detection region setting unit 110 of Fig. 1. Then the client apparatus 200 transmits setting information of the detection region generated by the detection region generation unit 205 to the camera 100 through a network 300. The camera 100 includes a detection region setting unit 110a instead of the detection region setting unit 110 of Fig. 1, and the detection region setting unit 110a stores the setting information of the detection region supplied from the client apparatus 200 in a detection region storage unit 111.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing apparatus, comprising:
a detection line setting unit (108) configured to set a detection line (410) to be used for detecting passing of a subject (500) in an image;
a subject detection unit (105) configured to perform a detection process of detecting the subject (500);
a determination unit (107) configured to determine whether the subject (500) which has been detected in the image has passed the detection line (410); and
a detection region setting unit (110) configured to set, in accordance with the detection line, a detection region (420) so as to include the detection line (410), wherein the detection region (420) is to be subjected to the detection process by the subject detection unit.

2. The information processing apparatus according to Claim 1, wherein the detection line setting unit (108) sets the detection line (410) that includes at least one of a position, a length, and an inclination of the detection line (410) in the image.

3. The information processing apparatus according to Claim 1 or Claim 2, further comprising:
display control means (201) configured to display the image in display means (202),
wherein the detection line setting unit (108) receives a designation of the detection line (410) in the image displayed by the display control means (201) and obtains the setting information of the detection line (410).

4. The information processing apparatus according to any one of Claim 1 to Claim 3, wherein the detection region setting unit (110) sets a region (420) which includes the detection line (410), which has at least a length of the detection line (410) in an extending direction of the detection line (410), and which has predetermined detection widths in a direction orthogonal to the detection line (410) as the detection region (420).

5. The information processing apparatus according to Claim 4, wherein the detection region setting unit determines a length obtained by multiplying the length of the detection line (410) by a predetermined magnification as the detection widths.

6. The information processing apparatus according to Claim 4, wherein the detection region setting unit (110) sets the detection widths based on a moving speed of the subject (500).

7. The information processing apparatus according to Claim 6, wherein the detection region setting unit (110) sets the detection widths such that the numbers of times the subject (500) is detected by the detection process before and after the subject (500) has passed the detection line (410) are equal to or larger than the set numbers of times based on the moving speed of the subject (500).

8. The information processing apparatus according to Claim 4, wherein the detection region setting unit (110) sets a length of the detection region (420) in the extending direction of the detection line (410) based on a size of the subject (500).

9. The information processing apparatus according to Claim 8, wherein the detection region setting unit (110) sets the detection region (420) which has a length corresponding to at least a size of the subject (500) on an upper end side of the detection line (410).

10. The information processing apparatus according to any one of Claim 1 to Claim 9, wherein the detection region setting unit (110) sets a circumscribed rectangle surrounding a detection region (420) which includes the detection line (410), which has at least a length of the detection line (410) in an extending direction of the detection line (410), and which has predetermined detection widths in a direction orthogonal to the detection line (410) as the detection region (420).

11. An information processing method, comprising:
setting a detection line (410) to be used for detecting passing of an subject (500) in an image;
performing a detection process of detecting the subject (500);
determining whether the subject (500) which has been detected in the image has passed the detection line (410); and
setting, in accordance with the detection line, a detection region (420) so as to include the detection line (410), wherein the detection region (420) is to be subjected to the detection process.

12. An imaging apparatus, comprising:
the information processing apparatus set forth in any one of Claim 1 to Claim 10; and
imaging means configured to capture the image.

13. A network camera system, comprising:
the imaging apparatus set forth in Claim 12; and
a client apparatus which is connected to the imaging apparatus through a network and which includes display means.

14. A program that causes a computer to function as the means included in the information processing apparatus set forth in any one of Claim 1 to Claim 10.
